## Europäisches Patentamt

## European Patent Office

## Office européen des brevets

(19)

(11) Veröffentlichungsnummer: **0 346 391**
**B1**

(12) **EUROPÄISCHE PATENTSCHRIFT**

(45) Veröffentlichungstag der Patentschrift: **10.10.90**

(51) Int. Cl.[5]: **B 65 G 47/14**

(21) Anmeldenummer: **88902762.9**

(22) Anmeldetag: **30.03.88**

(86) Internationale Anmeldenummer:
**PCT/AT88/00016**

(87) Internationale Veröffentlichungsnummer:
**WO 88/07491 06.10.88 Gazette 88/22**

(54) **VORRICHTUNG ZUM ENTWIRREN UND VEREINZELN VON MONTAGETEILEN.**

(30) Priorität: **01.04.87 AT 785/87**

(43) Veröffentlichungstag der Anmeldung:
**20.12.89 Patentblatt 89/51**

(45) Bekanntmachung des Hinweises auf die
Patenterteilung:
**10.10.90 Patentblatt 90/41**

(84) Benannte Vertragsstaaten:
**AT BE CH DE FR GB IT LI LU NL SE**

(56) Entgegenhaltungen:
**AU-B- 536 814**
**DE-A-2 543 108**
**DE-A-3 135 581**
**DE-B-2 552 763**
**DE-C- 931 557**

(73) Patentinhaber: **STIWA-Fertigungstechnik Sticht
Gesellschaft m.b.H
Steinhüblstrasse 4
A-4800 Attnang-Puchheim (AT)**

(72) Erfinder: **STICHT, Walter
Karl-Heinrich-Waggerl-Strasse 8
A-4800 Attnang-Puchheim (AT)**

(74) Vertreter: **Wolke, Heidemarie, Dr.
Stadtplatz 7
A-4400 Steyr (AT)**

EP 0 346 391 B1

**Beschreibung**

Die Erfindung betrifft eine Vorrichtung zum Entwirren und Vereinzeln von Montageteilen mit einer Wirbelkammer mit einem Einlaß für die zu entwirrenden Montageteile, mit einer im Bodenbereich des Innenraumes angeordneten und senkrecht zur Längsachse sowie etwa parallel zu einer an den Bodenbereich des Innenraumes angelegten Tangente ausgerichteten Düsenanordnung unterhalb des Einlasses zum Erzeugen einer Druckluftströmung in dem etwa zylinderförmig ausgebildeten Innenraum der Wirbelkammer, deren Längsachse waagrecht verläuft, und mit einem Auslaß für die entwirrten Montageteile, der in einem der Düsenanordnung gegenüberliegenden Wandteil der Wirbelkammer vorgesehen ist und dem ein Aufnahmebereich für die entwirrten Montageteile nachgeordnet ist.

Eine bekannte Vorrichtung zum Entwirren und Vereinzeln von Montageteilen — gemäß DE-OS 25 52 763 — ist unter anderem mit einer Wirbelkammer ausgestattet. Die Wirbelkammer ist einem Behälter zur Aufnahme einer ungeordneten Menge von Montageteilen nachgeordnet und wird über eine Dosiervorrichtung mit einer Teilmenge der Montageteile beschickt. Danach wird die Teilmenge durch das taktweise Zuführen von Druckluft in der Wirbelkammer durcheinandergewirbelt. Nach einer voreingestellten Anzahl von Entwirrtakten wird ein Teil einer der Düsenanordnung gegenüberliegenden Wand der Wirbelkammer klappenartig geöffnet, und die in der Wirbelkammer vorhandenen Montageteile werden durch einen über die Düsenanordnung zugeführten Druckluftstrom zu einem Aufnahmebereich für die entwirrten Montageteile befördert. Dieser Aufnahmebereich kann durch eine Ablagefläche zur manuellen Entnahme von vereinzelten Montageteilen oder durch einen Anfangsbereich eines Förderers zum Ausrichten und Vereinzeln der entwirrten Montageteile gebildet sein. Diese Vorrichtung hat sich beim Entwirren von stark verhängten Montageteilen bewährt, ermöglicht jedoch nur einen taktweisen Auswurf der vereinzelten Montageteile.

Aus der AU-B-536 814 ist bereits eine Vorrichtung zum Entwirren und Vereinzeln von Montageteilen mit einer Wirbelkammer bekannt. Diese weist einen etwa zylinderförmig ausgebildeten Innenraum auf, und deren Längsachse verläuft waagrecht. Etwa parallel zu einer an den Bodenbereich des Innenraumes angelegten Tangente ist eine Düsenanordnung zum Erzeugen einer Druckluftströmung im Inneren der Wirbelkammer angeordnet. Oberhalb der Düsenanordnung ist ein Einlaß für die zu entwirrenden Montageteile, und im Bereich der der Düsenanordnung gegenüberliegenden Wand ist ein Auslaß vorgesehen. Über diesen Auslaß können jedoch nur vereinzelte Teile ausgetragen werden. Außerdem ist der Auslaß senkrecht zur Düsenanordnung angeordnet, so daß die Teile entgegen der Schwerkraft gefördert werden müssen.

Bei einer weiteren bekannten Vorrichtung zum Entwirren und Vereinzeln von Montageteilen — gemäß DE-A-25 43 108 — ist ebenfalls eine Wirbelkammer mit einer waagrechten Längsachse und einem zylinderförmigen Querschnitt angeordnet. Der tangential zum Innenraum im Bodenbereich angeordneten Düsenanordnung ist gegenüberliegend derselben ein Auslaß für vereinzelte Montageteile vorgesehen. Neben dem Auslaß ist eine Prallwand angeordnet, die senkrecht zum Auslaßquerschnitt verläuft. Durch die direkte Bewegung der Druckluft in Transportrichtung des Auslasses kann eine Zentrifugalbeschleunigung der Montageteile nicht erfolgen, und es kommt durch verhängte Teile sehr leicht zu einem Teilestau im Bereich dieses Auslasses.

Der vorliegenden Erfindung liegt die Aufgabe zugrunde, eine Vorrichtung zum Entwirren und Vereinzeln von Montageteilen zu schaffen, bei der die während des Entwirrvorganges anfallenden vereinzelten Teile ehestmöglich aus dem Innenraum der Wirbelkammer entfernt und an den Aufnahmebereich für entwirrte Montageteile weitergeleitet werden können. Darüberhinaus soll ein einfacher Aufbau der Wirbelkammer mit wenigen Teilen möglich sein.

Diese Aufgabe der Erfindung wird dadurch gelöst, daß der Auslaß im Berührungspunkt bzw. -bereich zwischen dem Innenraum und einer an die Wirbelkammer angelegten, senkrecht zu der Tangente bzw. einer Düsenbohrung der Düsenanordnung verlaufenden weiteren Tangente bzw. in einer von der Düsenanordnung entgegengesetzten Richtung oberhalb desselben angeordnet ist und eine insbesondere parallel zur Düsenbohrung verlaufende, sich vom Innenraum der Wirbelkammer nach außen erstreckende, oberhalb des Berührungspunktes bzw. -bereiches angeordnete Prallwand umfaßt. Der Vorteil dieser Lösung liegt darin, daß die im Zuge der Verwirbelung sich voneinander lösenden Montageteile über den durch die Auslässe ständig austretenden Luftschwall mitgenommen und auf den Aufnahmebereich abgelegt werden. Gleichzeitig wird durch das höhere Gewicht von noch zusammenhängenden Montageteilen bzw. deren unterschiedliche Bewegungsbahn aufgrund der höheren Masse entlang der Oberfläche des Innenraumes erreicht, daß diese Teilgruppen im Übergangsbereich zwischen Innenraum und Auslaß aufprallen und durch die dadurch entstehende Energie die einzelnen Federn voneinander gelöst werden. Durch diesen damit erreichten Sortiereffekt von bereits vereinzelten und noch zu Teilegruppen zusammenhängenden Montageteilen kann auf die Anordnung einer Auslaßklappe im Bereich der Auslässe verzichtet werden und auch der dadurch notwendige Steueraufwand zum Steuern der Tätigkeit dieser Auslaßklappe eingespart werden.

Nach einer anderen bevorzugten Weiterbildung ist vorgesehen, daß der Querschnitt des Innenraumes der Wirbelkammer kreisförmig ist. Durch die kreisförmige Querschnittsform des Innenraumes wird eine schonende Flugbahn von Gruppen von mehreren noch zusammenhängenden Montageteilen erreicht, so daß sich eine derartige Ausbildung vor allem für heikle Montageteile empfiehlt.

Vorteilhaft ist es aber auch, wenn der Querschnitt des Innenraumes der Wirbelkammer mehreckig, insbesondere sechs- oder achteckig ist, da durch die aufeinanderfolgenden schrägen Flächen und die dazwischen vorgesehenen Kanten ein mehrmaliges Aufprallen der noch in Teilegruppen zusammenhängenden Montageteile stattfindet und dadurch die Auflösung in Einzelteile erleichtert wird.

Es ist aber auch möglich, daß sich der Auslaß im zweiten Quadranten etwa von der Abszisse in Richtung der Ordinate erstreckt, wodurch ein gleichförmiger Druckluftstrom aufgebaut werden kann, durch den die einzelnen Montageteile ohne nachträgliche Verwirrung in den Aufnahmebereich verbracht werden können.

Nach einer anderen Weiterbildung ist vorgesehen, daß der Einlaß im ersten Quadranten angeordnet ist, da dadurch zu der Beschleunigung durch den Druckluftstrom auch noch die Beschleunigung der Fallhöhe beim Hinabfallen der Teilegruppen aus noch verhängten Montageteilen den Entwirrvorgang unterstützt.

Vorteilhaft ist es weiters, wenn die Prallwand der Wirbelkammer schräg zur Abszisse verläuft mit in Richtung auf die Ordinate zunehmendem Abstand zur Abszisse, da aufprallende Montageteile bzw. Teilegruppen in jedem Fall in den Bereich der Düsenanordnung zurückgeworfen werden.

Von Vorteil ist es weiters, wenn die Prallwand in den Innenraum vorragt. Da schwerere Montageteilgruppen in jedem Fall gegen die Prallwand geführt werden, wird ein besseres Entwirrergebnis bei stark verhängten Teilen erreicht.

Nach einer anderen Ausführungsvariante ist vorgesehen, daß zumindest ein in den Innenraum der Wirbelkammer vorragender Fortsatz der Prallwand schräg zur Abszisse verläuft und das dem Innenraum zugewandte Ende der Prallwand einen größeren Abstand von der Abszisse aufweist als das dem Auslaß zugeordnete Ende, wodurch verhindert wird, daß von der Prallwand abprallende Teilegruppen den Auslaß passieren können.

Nach einer anderen Ausführungsform ist vorgesehen, daß die Tiefe der Prallwand größer ist als die Distanz zwischen den Innenkanten der Prallwand und der dieser gegenüberliegenden Begrenzungswand des Auslasses in einer zu der weiteren Tangente senkrechten Richtung, wodurch das Aufprallen der Teilegruppen auf die Prallflächen auch unter ungünstigen Verhältnissen sichergestellt ist.

Vorteilhaft ist es weiters, wenn in Längsrichtung der Wirbelkammer mehrere im Abstand voneinander angeordnete Auslässe vorgesehen sind, da dadurch eine größere Teilmenge gleichzeitig entwirrt werden kann. Gleichzeitig wird erreicht, daß die aus der Wirbelkammer austretenden Montageteile gleichmäßig verteilt auf einen Aufnahmebereich gelangen.

Von Vorteil ist es weiters, wenn die Länge der Auslässe größer ist als die Distanz zwischen den Auslässen, da dadurch verhindert wird, daß sich nicht auflösbare Teilegruppen bilden, die zwischen den Auslässen verbleiben.

Es ist weiters möglich, daß jeweils eine Düsenbohrung der Düsenanordnung mittig zu jedem Auslaß angeordnet ist, wodurch ein gleichmäßiges Austragen der vereinzelten Montageteile erreicht wird.

Nach einer anderen Ausführungsform ist vorgesehen, daß die untere Innenkante des Auslasses oberhalb des Aufnahmebereiches für die entwirrten Montageteile angeordnet ist, wodurch die vereinzelten Montageteile in einem flachen Bogen auf den Aufnahmebereich fallen und die Gefahr eines nachträglichen Verwirrens der ausgetragenen bereits vereinzelten Montageteile verhindert wird.

Vorteilhaft ist es aber auch, wenn der Einlaß der Wirbelkammer über einen Fallschacht mit dem Auslaß einer Fördervorrichtung für Montageteilgruppen verbunden ist, wobei sich die Fördervorrichtung vom Fallschacht in den Bereich eines Vorratsbehälters zur Aufnahme einer ungeordneten Menge von Montageteilen erstreckt, da dadurch die Entwirrbewegung in der Wirbelkammer durch die Fallbewegung im Fallschacht zusätzlich unterstützt wird.

Es ist weiters möglich, daß der Auslaß der Wirbelkammer über einen Förderkanal mit dem Aufnahmebereich verbunden ist, wodurch eine geordnete Ablage der vereinzelten Teile in verschiedenen Teilen des Aufnahmebereiches möglich ist.

Nach einer weiteren Ausführungsvariante ist vorgesehen, daß der Einlaß der Wirbelkammer unterhalb einer Sortier- und bzw. oder Orientiervorrichtung eines der Wirbelkammer nachgeordneten Förderers für die entwirrten Montageteile angeordnet ist und der Auslaß mit dem den Aufnahmebereich bildenden Förderer in Förderrichtung vor der Sortier- und bzw. oder Orientiervorrichtung verbunden ist. Dadurch können im Bereich der Sortier- und bzw. oder Orientiervorrichtung noch verhängte Montageteile ausgeschieden, vereinzelt und wieder auf den Förderer zurückgebracht werden.

Von Vorteil ist es weiters, wenn die Düsenanordnung über eine Steuervorrichtung zur kontinuierlichen Abgabe von Druckluft beaufschlagt ist, da dadurch ein kontinuierlicher Antransport von verhängten Montageteilen und ein Abtransport von vereinzelten Montageteilen möglich ist.

Weiters ist es aber auch möglich, daß die Düsenanordnung über eine Steuervorrichtung zur Abgabe von Druckluftimpulsen beaufschlagt ist, da dadurch die von der Prallwand zurückgeworfenen noch verhängten Montageteile, ohne sofort vom Druckluftstrom wieder beschleunigt zu werden, an einer anderen Stelle des Innenraumes aufprallen können und bei bestimmten Teilen der Entwirrgrad verbessert werden kann.

Zum besseren Verständnis der Erfindung wird diese im folgenden anhand der in den Zeichnungen dargestellten Ausführungsbeispiele näher erläutert.

Es zeigen:

Fig. 1 eine Vorrichtung zum Entwirren und Vereinzeln von Montageteilen mit einer Wirbelkammer in stark vereinfachter Darstellung in Seitenansicht, teilweise geschnitten;

Fig. 2 die Wirbelkammer der Vorrichtung nach Fig. 1 in größerem Maßstab in Seitenansicht geschnitten;

Fig. 3 die Wirbelkammer nach Fig. 2 in einer anderen Phase des Entwirrvorganges;

Fig. 4 die Wirbelkammer nach Fig. 2 bzw. 3 in Stirnansicht und im Schnitt, gemäß den Linien IV-IV in Fig. 3;

Fig. 5 eine Ausführungsvariante einer Wirbelkammer mit einer schräg zur Abszisse verlaufenden Prallwand;

Fig. 6 eine andere Ausführungsform der Wirbelkammer mit einer in den Innenraum der Wirbelkammer vorspringenden Prallplatte;

Fig. 7 einen Entnahmebereich des Förderers der Vorrichtung zum Entwirren und Vereinzeln von Montageteilen nach Fig. 1 in Seitenansicht, geschnitten und in größerem Maßstab.

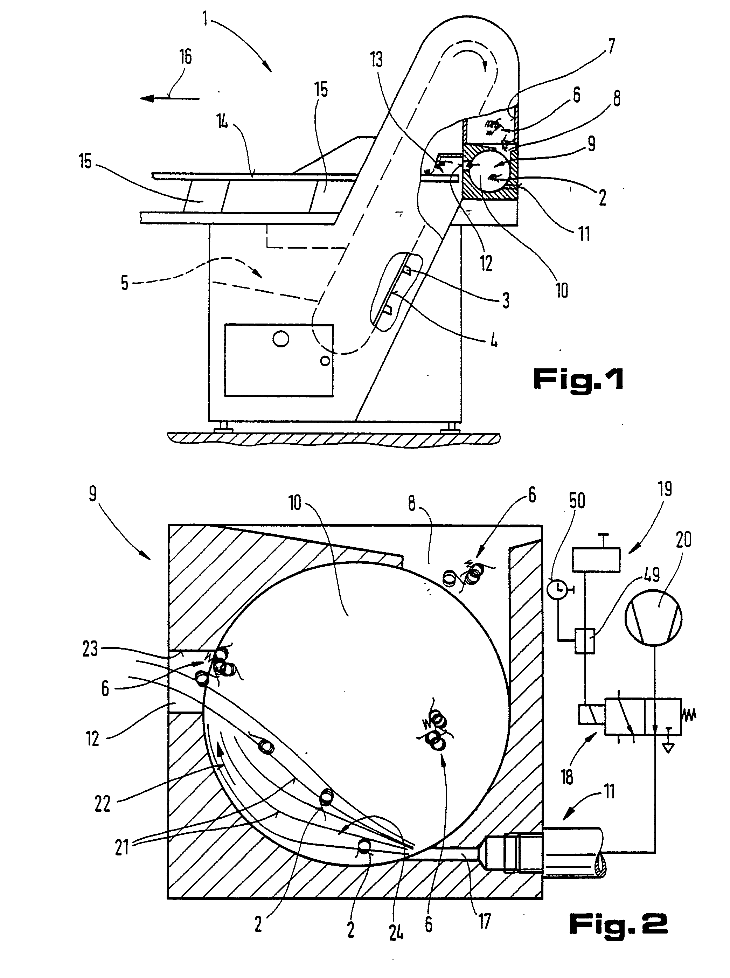

In Fig. 1 ist eine Vorrichtung 1 zum Entwirren und Vereinzeln von Montageteilen 2 dargestellt. Die Montageteile werden mit einem mit Querstegen 3 versehenen Förderband 4 eines Elevators von einem Vorratsbehälter 5 hochgefördert und fallen vereinzelt oder in aus mehreren Montageteilen 2 bestehenden Teilegruppen 6 durch einen Fallschacht 7 und einen Einlaß 8 in eine Wirbelkammer 9. In einen Innenraum 10 der Wirbelkammer 9 mündet eine Düsenanordnung 11, mit der Druckluft in die Wirbelkammer zugeführt werden kann. Die vereinzelten Montageteile 2 können die Wirbelkammer durch einen Auslaß 12 verlassen und fallen von diesem auf einen Aufnahmebereich 13 eines Förderers 14, der über Vibratoren 15 die Montageteile mit einer Förderbewegung in Förderrichtung — Pfeil 16 — beaufschlagt.

In Fig. 2 ist die Wirbelkammer 9 in größerem Maßstab dargestellt. Die Düsenanordnung 11 wird durch Düsenbohrungen 17 gebildet. Durch diese wird über ein Steuerventil 18, welches über eine Steuervorrichtung 19 gesteuert wird, Druckluft von einem Kompressor 20 in die Wirbelkammer zugeführt. Bei geöffnetem Steuerventil 18 — wie in der Zeichnung gezeigt tritt aus der Düsenbohrung 17 Durchfluß aus und bildet einen schematisch durch Linien 21 angedeuteten Luftstrom. Durch den Luftstrom werden die durch den Einlaß 8 in den Innenraum 10 der Wirbelkammer 9 hereinfallende Teilegruppen 6 zusätzlich zu der durch das Herabfallen entstandenen Geschwindigkeit in Umfangsrichtung — Pfeil 22 — beschleunigt. Wie in der Zeichnung schematisch dargestellt, prallen dadurch Teilegruppe 6 beim Passieren des Auslasses 12 auf eine Prallwand 23. Durch die beim Aufprallen entstehende Energie und die dabei entstehende Verformung in den Montageteilen lösen sich diese voneinander und fallen in einzelne Montageteile 2 auseinander, die in einen Bodenbereich 24 des Innenraumes 10 zurückspringen.

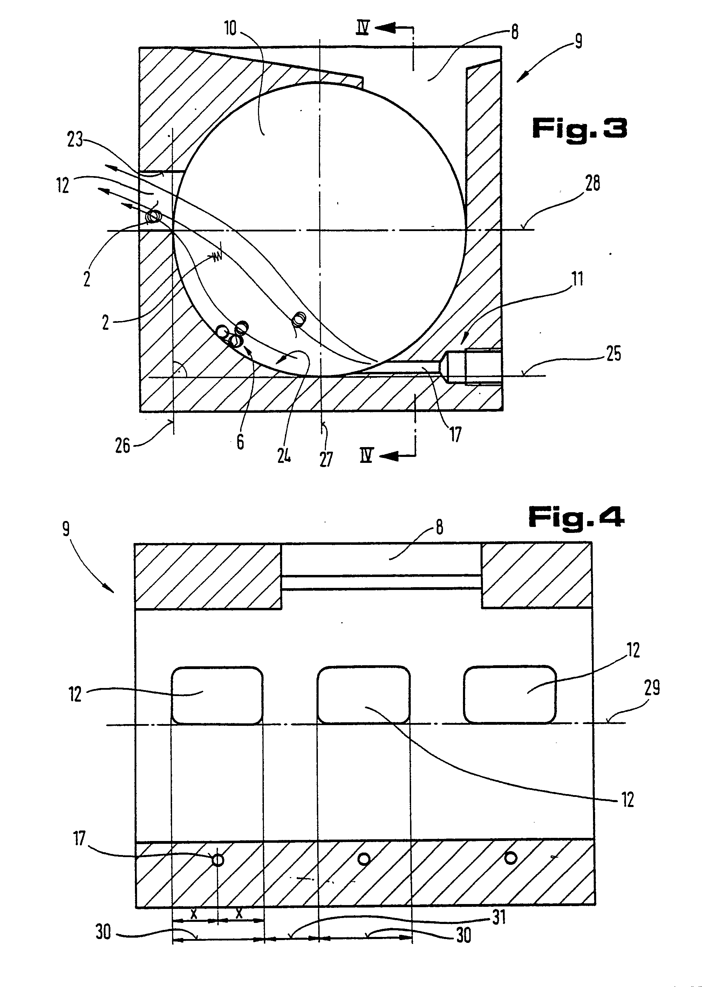

Wie nun besser aus Fig.3 zu ersehen ist, tauchen die vereinzelten Montageteile 2 in den schematisch durch Linien angezeigten Druckluftstrom ein und werden aufgrund ihres geringen Gewichtes mitgerissen und passieren dabei den Auslaß 12. Springen dagegen noch Teilegruppen 6 von noch zusammenhängenden Montageteilen 2 zurück, so fallen diese aufgrund ihres hohen Gewichtes in den Bodenbereich 24 des Innenraumes 10 und bewegen sich durch die Einwirkung des Druckluftstromes wieder in Richtung der Prallwand 23, wo sie erneut dagegengeschlagen werden und sich dabei auflösen können. Wie aus der Darstellung ersichtlich, verläuft die Düsenbohrung 17 parallel zu einer im Bodenbereich 24 an den Innenraum 10 angelegten Tangente 25. Der Auslaß 12 befindet sich dagegen in einem Berührungsbereich einer senkrecht zur Tangente 25 verlaufenden weiteren Tangente 26 und dem Innenraum 10.

Bei der in den Fig. 2 und 3 dargestellten Wirbelkammer ist ein Querschnitt des Innenraumes 10 kreisförmig.

Geht man bei der Beschreibung der Anordnung der Düsenbohrung 17 bzw. Düsenanordnung 11 und des Einlasses 8 bzw. Auslasses 12 von der Definition im Einheitskreis aus, so mündet die Düsenbohrung 17 bzw. die Düsenanordnung 11 im vierten Quadranten des Einheitskreises nahe einer Ordinate 27 und verläuft parallel zu einer Abszisse 28. Der Auslaß 12 befindet sich im zweiten Quadranten und erstreckt sich von der Abszisse 28 in Richtung der Ordinate 27. Der Einlaß 8 ist im ersten Quadranten des kreisförmigen Querschnittes der Wirbelkammer 9 angeordnet.

Die Prallwand 23 verläuft bei diesem Ausführungsbeispiel parallel zur Abszisse 28.

Aus der Darstellung in Fig. 4 ist ersichtlich, daß sich der Einlaß 8 nur über einen Teilbereich einer Länge des Innenraumes 10 erstreckt. Eine Längsachse 29 des Innenraumes 10 bzw. der Wirbelkammer 9 verläuft waagrecht. In Richtung der Längsachse 29 sind hintereinander mehrere Auslässe 12 angeordnet. Eine Länge 30 der Auslässe 12 in Richtung der Längsachse 29 des Innenraumes 10 ist größer, als eine Distanz 31 zwischen einander unmittelbar benachbarten Auslässen 12. Wie weiters ersichtlich ist die Düsenbohrung 17 jeweils mittig der Länge 30 angeordnet.

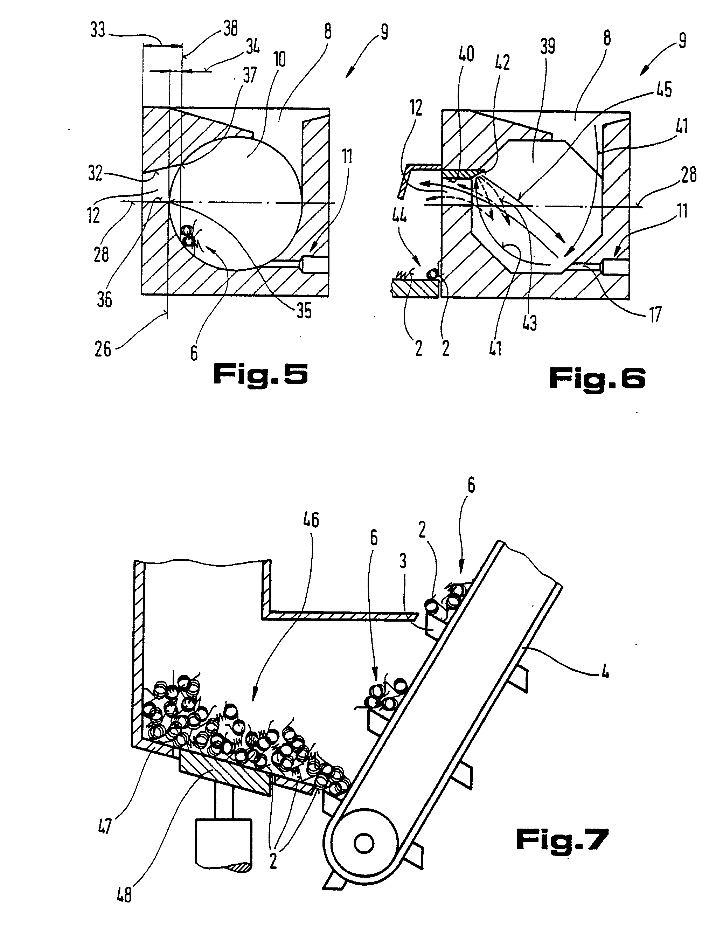

In Fig. 5 ist eine Ausführungsform einer Wirbelkammer 9 gezeigt, bei der ein Innenraum 10 ebenfalls einen kreisrunden Querschnitt aufweist. Eine Prallwand 32 verläuft in diesem Fall schräg zu der Abszisse 28, wobei das dem Innenraum näherliegende Ende der Prallwand 32 einen größeren Abstand von der Abszisse 28 aufweist, wie das vom Innenraum distanzierte Ende. Die Funktion dieser Wirbelkammer 9 sowie die Anordnung der Düsenanordnung 11 bzw. des Einlasses 8 und des Auslasses 12 entspricht der in Fig. 2 und 3 beschriebenen Wirbelkammer 9, weshalb für gleiche Teile gleiche Bezugszeichen verwendet werden.

Wie aus dieser Darstellung weiters zu ersehen ist, weist die Prallwand 32 eine Tiefe 33 auf, die größer ist als eine Distanz 34 zwischen einer Innenkante 35 zwischen einer unteren Begrenzungswand 36 und dem Innenraum 10 und einer Innenkante 37 zwischen der Prallwand und dem Innenraum 10. Die Distanz 34 ist dabei ein zu einer weiteren Tangente 26 senkrechter Abstand. Diese Tangente 10 berührt im Bereich der Innenkante 35 den Innenraum 10 und eine zu dieser weiteren Tangente 26 parallele Gerade 38 verläuft durch die Innenkante 37. Durch dieses Mindestmaß der Tiefe 33 soll sichergestellt werden, daß eine Teilegruppe 6 aus mehreren, noch ineinander verhängten Montageteilen, wenn sie im Bereich des Auslasses 12 ihre Flugbahn in Richtung der weiteren Tangente 26 fortsetzt, nicht den Auslaß 12 in Richtung des nachgeordneten Aufnahmebereiches passieren kann.

In Fig. 6 ist eine Wirbelkammer 9 mit einem Innenraum 39 gezeigt, die einen mehreckigen, im vorliegenden Fall achteckigen Querschnitt aufweist. Die Anordnung des Einlasses 8 und des Auslasses 12 sowie der Düsenanordnung 11 ist gegenüber dem vorstehend beschriebenen Wirbelkammern unverändert. Eine Prallwand 40 ragt in den Innenraum 39 vor. Wie nunmehr schematisch durch Pfeile angedeutet wobei — die in vollen Linien gezeichneten Pfeile Teilegruppen 6 und die in strichlierten Linien gezeichneten Pfeile die Flugbahn von Einzelteilen 2 darstellen sollen —, fallen die Teilegruppen 6 in den Bereich der Düsenanordnung 11, werden beschleunigt und prallen gegen die Prallwand 40 bzw. den in den Innenraum vorspringenden Fortsatz 42. Durch den Aufprall an der Prallwand 40 bzw. dem Fortsatz 42 lösen sie sich in einzelne Montageteile auf — symbolisch durch die pfeile 43 dargestellt —, die dann durch den aus der Düsenbohrung 17 austretenden Luftstrom erfaßt und durch den Auslaß 12 in einen Aufnahmebereich 44, beispielsweise eine Ablagefläche für vereinzelte Montageteile 2 ausgetragen werden. Löst sich die Teilegruppe 6 beim ersten Aufprall an der Prallwand 40 bzw. dem Fortsatz 42 nicht auf, so fällt die Teilegruppe entsprechend der durch den Pfeil 45 angezeigten Flugbahn auf die gegenüberliegende Seite des Innenraums 39 zurück und wird durch den aus der Düsenanordnung 11 austretenden Luftstrom wieder gegen die Prallwand 40 bzw. den Fortsatz 42 geschleudert. Dabei kann es vorteilhaft sein, wenn die Prallwand 40 zumindest im Bereich des Fortsatzes 42 schräg zur Abszisse 28 gegen den Innenraum 39 ansteigend verläuft.

In Fig. 7 ist gezeigt, wie die Montageteile 2 bzw. Teilegruppen 6 also eine Teilmenge, mit den Querstegen 3, die auf dem Förderband 4 angeordnet sind, aus einer ungeordneten Menge 46 von Montageteilen 2 entnommen werden können. Durch das Vorbeistreichen der Querstege 3 werden jeweils einzelne Montageteile 2 bzw. Teilegruppen 6 abgestreift und in den Bereich des Fallschachtes 7 — Fig. 1 — hochgefördert. Um einen reibungslosen Nachschub der Montageteile 2 in den Bereich der Querstege 3 zu ermöglichen, kann im Behälterboden 47 bzw. im Schurrenboden ein höhenverstellbarer Schieber 48 angeordnet sein.

Die Ausbildung des Aufnahmebereiches des Förderbandes im Bereich des Behälterbodens bzw. des Schiebers ist beispielsweise in der DE-OS 31 35 581 näher beschrieben.

Während, wie in Fig. 2 anhand des schematischen Schaltplanes gezeigt, die Druckluft durch die Düsenanordnung kontinuierlich zugeführt werden kann, ist es auch möglich, die Steuervorrichtung 19 mit einem Unterbrecherglied 49 anhand von Taktimpulsen von einem Zeitgeber 50, bei welchem die Zeitspanne einstellbar ist, zu steuern, so daß der Innenraum der Wirbelkammer mit Druckluftimpulsen beaufschlagt wird. Selbstverständlich ist es aber auch möglich, abwechselnd über eine gewisse Zeitspanne kontinuierlich Druckluft zuzuführen und zwischenzeitlich, gegebenenfalls auch zusätzlich, den Innenraum wieder mit einzelnen Druckluftimpulsen zu beaufschlagen.

**Patentansprüche**

1. Vorrichtung (1) zum Entwirren und Vereinzeln von Montageteilen (2) mit einer Wirbelkammer (9) mit einem Einlaß (8) für die zu entwirrenden Montageteile (2), mit einer im Bodenbereich des Innenraums (10) angeordneten und senkrecht zur Längsachse (29) sowie etwa parallel zu einer an den Bodenbereich des Innenraumes (10) angelegten Tangente (25) ausgerichteten Düsenanordnung (11) unterhalb des Einlasses (8) zum Erzeugen einer Druckluftströmung in dem etwa zylinderförmig ausgebildeten Innenraum (10) der Wirbelkammer (9), deren Längsachse waagrecht verläuft, und mit einem Auslaß (12) für die entwirrten Montageteile (2), der in einem der Düsenanordnung (11) gegenüberliegenden Wandteil der Wirbelkammer (9) vorgesehen ist und dem ein Aufnahmebereich für die entwirrten Montageteile (2) nachgeordnet ist, dadurch gekennzeichnet, daß der Auslaß (12) im Berührungspunkt bzw. -bereich zwischen dem Innenraum (10) und einer an die Wirbelkammer (9) angelegten, senkrecht zu der Tangente (25) bzw. einer Düsenbohrung (17) der Düsenanordnung (11) verlaufenden weiteren Tangente (26) bzw. in einer von der Düsenanordnung (11) entgegengesetzten Richtung oberhalb desselben angeordnet ist und eine insbesondere parallel zur Düsenbohrung (17) verlaufende, sich vom Innenraum (10) der Wirbelkammer (9) nach außen erstreckende, oberhalb des Berührungspunktes bzw. -bereiches angeordnete Prallwand (23) umfaßt.

2. Vorrichtung nach Anspruch 1, dadurch gekennzeichnet, daß der Querschnitt des Innenraumes (10) der Wirbelkammer (9) kreisförmig ist.

3. Vorrichtung nach Anspruch 1, dadurch gekennzeichnet, daß der Querschnitt des Innenraumes (10) der Wirbelkammer (9) mehreckig, insbesondere sechs- oder achteckig ist.

4. Vorrichtung nach einem der Ansprüche 1 bis 3, dadurch gekennzeichnet, daß sich der Auslaß (12) im zweiten Quadranten etwa von der Abszisse (28) in Richtung der Ordinate (27) erstreckt.

5. Vorrichtung nach einem der Ansprüche 1 bis 4, dadurch gekennzeichnet, daß der Einlaß (8) im ersten Quadranten angeordnet ist.

6. Vorrichtung nach einem der Ansprüche 1 bis 5, dadurch gekennzeichnet, daß die Prallwand (23) der Wirbelkammer (9) schräg zur Abszisse (28) verläuft mit in Richtung auf die Ordinate (27) zunehmendem Abstand zur Abszisse (28).

7. Vorrichtung nach einem der ansprüche 1 bis 6, dadurch gekennzeichnet, daß die Prallwand (23) in den Innenraum (10) vorragt.

8. Vorrichtung nach einem der Ansprüche 1 bis 7, dadurch gekennzeichnet, daß zumindest ein in den Innenraum (10) der Wirbelkammer (9) vorragender Fortsatz (42) der Prallwand (23) schräg zur Abszisse (28) verläuft und das dem Innenraum (10) zugewandte Ende der Prallwand (23) einen größeren Abstand von der Abszisse (28) aufweist als das dem Auslaß (12) zugeordnete Ende.

9. Vorrichtung nach einem der Ansprüche 1 bis 8, dadurch gekennzeichnet, daß die Tiefe (33) der Prallwand (23) größer ist als die Distanz (34) zwischen den Innenkanten (35, 37) der Prallwand (23, 32) und der dieser gegenüberliegenden Begrenzungswand (36) des Auslasses (12) in einer zu der weiteren Tangente (26) senkrechten Richtung.

10. Vorrichtung nach einem der Ansprüche 1 bis 9, dadurch gekennzeichnet, daß in Längsrichtung der Wirbelkammer (9) mehrere im Abstand voneinander angeordnete Auslässe (12) vorgesehen sind.

11. Vorrichtung nach einem der Ansprüche 1 bis 10, dadurch gekennzeichnet, daß die Länge (30) der Auslässe (12) größer ist als die Distanz (31) zwischen den Auslässen (12).

12. Vorrichtung nach einem der Ansprüche 1 bis 11, dadurch gekennzeichnet, daß jeweils eine Düsenbohrung (17) der Düsenanordnung (11) mittig zu jedem Auslaß (12) angeordnet ist.

13. Vorrichtung nach einem der Ansprüche 1 bis 12, dadurch gekennzeichnet, daß die untere Innenkante (35) des Auslasses (12) oberhalb des Aufnahmebereiches (44) für die entwirrten Montageteile (2) angeordnet ist.

14. Vorrichtung nach einem der Ansprüche 1 bis 13, dadurch gekennzeichnet, daß der Einlaß (8) der Wirbelkammer (9) über einen Fallschacht (7) mit dem Auslaß einer Fördervorrichtung für Montageteilgruppen verbunden ist, wobei sich die Fördervorrichtung vom Fallschacht (7) in den Bereich eines Vorratsbehälters (5) zur Aufnahme einer ungeordneten Menge von Montageteilen (2) erstreckt.

15. Vorrichtung nach einem der Ansprüche 1 bis 14, dadurch gekennzeichnet, daß der Auslaß (12) der Wirbelkammer (9) über einen Förderkanal mit dem Aufnahmebereich (44) verbunden ist.

16. Vorrichtung nach einem der Ansprüche 1 bis 15, dadurch gekennzeichnet, daß der Einlaß (8) der Wirbelkammer (9) unterhalb einer Sortier- und bzw. oder Orientiervorrichtung eines der Wirbelkammer nachgeordneten Förderers (14) für die entwirrten Montageteile (2) angeordnet ist und der Auslaß (12) mit dem den Aufnahmebereich bildenden Förderer (14) in Förderrichtung vor der Sortier- und bzw. oder Orientiervorrichtung verbunden ist.

17. Vorrichtung nach einem der Ansprüche 1 bis 16, dadurch gekennzeichnet, daß die Düsenanordnung (11) über eine Steuervorrichtung (19) zur kontinuierlichen Abgabe von Druckluft beaufschlagt ist.

18. Vorrichtung nach einem der Ansprüche 1 bis 17, dadurch gekennzeichnet, daß die Düsenanordnung (11) über eine Steuervorrichtung (19) zur Abgabe von Druckluftimpulsen beaufschlagt ist.

**Revendications**

1. Dispositif (1) pour séparer et isoler des pièces de montage (2) comprenant une chambre de tourbillonnnement (9) avec une entrée (8) pour les pièces de montage (2) à séparer, un arrangement de tuyère (11) disposé dans la zone du fond de l'espace interne (10) et s'étendant perpendiculairement à l'axe longitudinal (29) ainsi qu'approximativement parallèlement à une tangente à la zone de fond de l'espace interne (10) et situé en dessous de l'entrée (8) pour engendrer un écoulement d'air sous pression dans l'espace interne (10) de forme sensiblement cylindrique de la chambre de tourbillonnement (9), dont l'axe longitudinal s'étend horizontalement, et une sortie (12) pour les pièces de montage (2) séparées, qui est prévue dans la partie de paroi située en regard de l'arrangement de tuyère (11) de la chambre de tourbillonnement (9) et en aval de laquelle est disposée une zone de réception des pièces de montage (2) séparées, caractérisé en ce que la sortie (12) est disposée au point ou dans la zone de contact entre l'espace interne (10) et d'une autre tangente à la chambre de tourbillonnement (9), qui s'étend perpendiculairement à la tangente (25) ou à un alésage de tuyère (17) de l'arrangement de tuyère (11) ou est disposé dans une direction opposée à celle de l'arrangement de tuyère (11) au-dessus de celle-ci et comporte une paroi de rebondissement (23) qui est orientée sensiblement parallèlement à l'alésage de tuyère (17), s'étend de l'espace interne (10) de la chambre de tourbillonnement (9) vers l'extérieur et est disposée au-dessus du point ou de la zone de contact.

2. Dispositif selon la revendication 1, caractérisé en ce que la section transversale de l'espace interne (10) de la chambre de tourbillonnement (9) est de forme circulaire.

3. Dispositif selon la revendication 1, caractérisé en ce que la section transversale de l'espace interne (10) de la chambre de tourbillonnement (9) est polygonale, notamment hexa- ou octogonale.

4. Dispositif selon l'une des revendications 1 à 3, caractérisé en ce que la sortie (12) s'étend dans le deuxième cadran approximativement de l'abscisse (28) en direction de l'ordonnée (27).

5. Dispositif selon l'une des revendications 1 à 4, caractérisé en ce que l'entrée (8) est disposée dans le premier cadran.

6. Dispositif selon l'une des revendications 1 à 5, caractérisé en ce que la paroi de rebondissement (23) de la chambre de tourbillonnement (9) s'étend obliquement par rapport à l'abscisse (28), sa distance de l'abscisse (28) augmentant dans la direction de l'ordonnée (27).

7. Dispositif selon l'une des revendications 1 à 6, caractérisé en ce que la paroi de rebondissement (23) fait saillie dans l'espace interne (10).

8. Dispositif selon l'une des revendications 1 à 7, caractérisé en ce qu'au moins un prolongement (42) de la paroi de rebondissement (23), qui fait saillie dans l'espace interne (10) de la chambre de tourbillonnement (9) s'étend obliquement par rapport à l'abscisse (28) et que l'extrémité de la paroi de rebondissement (23), qui est orientée vers l'espace interne (10) présente une plus grande distance de l'abscisse (28) que l'extrémité associée à la sortie (12).

9. Dispositif selon l'une des revendications 1 à 8, caractérisé en ce que la profondeur (33) de la paroi de rebondissement (23) est plus grande que la distance (34) entre les arêtes intérieures (35, 37) de la paroi de rebondissement (23, 32) et la paroi de délimitation située en regard de la sortie (12), dans une direction perpendiculaire à l'autre tangente (26).

10. Dispositif selon l'une des revendications 1 à 9, caractérisé en ce que plusieurs sorties (12) sont disposées à une certaine distance les unes des autres dans la direction longitudinale de la chambre de tourbillonnement (9).

11. Dispositif selon l'une des revendications 1 à 10, caractérisé en ce que la longueur (30) des sorties (12) est supérieure à la distance (31) entre les sorties (12).

12. Dispositif selon l'une des revendications 1 à 11, caractérisé en ce qu'un alésage de tuyère (17) de l'arrangement de tuyère (11) est disposé de façon centrale à chaque sortie (12).

13. Dispositif selon l'une des revendications 1 à 12, caractérisé en ce que l'arête intérieure inférieure (35) de la sortie (12) est disposée au-dessus de la zone de réception (44) des pièces de montage (2) séparées.

14. Dispositif selon l'une des revendications 1 à 13, caractérisé en ce que l'entrée (8) de la chambre de tourbillonnement (9) est disposée par l'intermédiaire d'un puits de descente (7) à la sortie d'un dispositif de transport de groupes de pièces de montage, le dispositif de transport s'étendant depuis le puits de descente (7) jusqu'à dans la zone d'un récipient de réserve (5) pour la réception d'une quantité désordonnée de pièces de montage (2).

15. Dispositif selon l'une des revendications 1 à 14, caractérisé en ce que la sortie (12) de la chambre de tourbillonnement (9) est reliée par un canal de transport à la zone de réception (44).

16. Dispositif selon l'une des revendications 1 à 15, caractérisé en ce que la sortie (8) de la chambre de tourbillonnement est disposée en dessous d'un dispositif de triage et/ou d'orientation d'un convoyeur (14) disposé en aval de la chambre de tourbillonnement pour les pièces de montage (2) séparées et que la sortie (12) est reliée au convoyeur (14) formant la zone de réception, dans la direction de transport en avant du dispositif de triage et/ou d'orientation.

17. Dispositif selon l'une des revendications 1 à 16, caractérisé en ce que l'arrangement de tuyère (11) est sollicité par un dispositif de commande (19) pour la distribution continue de l'air sous pression.

18. Dispositif selon l'une des revendications 1 à 17, caractérisé en ce que l'arrangement de tuyère (11) est sollicité par un dispositif de commande (12) pour la distribution d'impulsions d'air sous pression.

**Claims**

1. Device (1) for disentangling and singling assembly parts (2) with a swirl chamber (9), with an inlet (8) for the assembly parts (2) to be disentangled with a nozzle arrangement (11) being arranged in the floor area (24) of the inner space (10) and aligned perpendicularly to the longitudinal axis (29) as well as approximately parallel to a tangent (25) to the floor area (24) of the inner space (10) for creating a compressed air current in an inner space of the swirl chamber a longitudinal axis (29) of this runs horizontally, and an outlet for the disentangled assembly parts, being provided in a wall part of the swirl chamber (9) opposite the nozzle arrangement (11) and with a reception area for the disentangled assembly parts, arranged downstream of the outlet, characterized in that the outlet (12) is arranged in the contact area between the inner space (10) and a further tangent (26) to the swirl chamber (9) running perpendicularly to the tangent (25) respectively to a nozzle bore (17) of the nozzle arrangement (11), respectively in a direction opposite and above the nozzle arrangement (11) and is provided with a baffle wall (23) running particularly parallel to the nozzle bore (17) and extending outwards from the inner space (10) of the swirl chamber (9) above the contact area.

2. Device according to Claim 1, characterized in that the cross-section of the inner space (10) of the swirl chamber (9) is circular.

3. Device according to Claim 1, characterized in that the cross-section of the inner space (10) of the swirl chamber (9) is polygonal, in particular hexagonal or octagonal.

4. Device according to one of Claims 1 to 3, characterized in that the outlet (12) extends in the second quadrant approximately from the abscissa (28) in the direction of the ordinate (27).

5. Device according to one of Claims 1 to 4, characterized in that the inlet (8) is arranged in the first quadrant.

6. Device according to one of Claims 1 to 5, characterized in that the baffle wall (23) of the swirl chamber (9) runs obliquely to the abscissa (28) and has a greater distance from the abscissa (28) in the direction of the ordinate (27).

7. Device according to one of Claims 1 to 6, characterized in that the baffle wall (23) projects into the inner space (10).

8. Device according to one of Claims 1 to 7, characterized in that at least a continuation (42) of the baffle wall (23), projecting into the inner space (10) of the swirl chamber (9), runs obliquely to the abscissa and one end of the baffle wall (23), facing the inner space (10), has a greater distance from the abscissa (28).

9. Device according to one of Claims 1 to 8, characterized in that a depth (33) of the baffle wall (23) is greater than a distance (34) between the edges (35, 37) of the baffle wall (23, 32) and of the limiting wall (36) of the outlet (12) opposite the latter and in a direction perpendicular to the further tangent (26).

10. Device according to one of Claims 1 to 9, characterized in that a plurality of outlets (12), arranged spaced apart, are provided in the longitudinal direction of the swirl chamber (9).

11. Device according to one of Claims 1 to 10, characterized in that a length (30) of the outlets (12) is greater than a distance (31) between the outlets (12).

12. Device according to one of Claims 1 to 11, characterized in that a nozzle bore (17) of the nozzle arrangement (11) is arranged in each case midway along the length (30) of an outlet (12).

13. Device according to one of Claims 1 to 12, characterized in that a lower edge (25) of the outlet (12) is arranged slightly above a reception area (44) for the disentangled assembly parts (2).

14. Device according to one of Claims 1 to 13, characterized in that the inlet (8) of the swirl chamber (9) is connected via a chute (7) to an outlet of a conveying device for groups of assembly parts, the conveying device extending from the chute (7) into the area of a supply container (5) for receiving a disordered quantity of assembly parts (2).

15. Device according to one of Claims 1 to 14, characterized in that the outlet (12) of the swirl chamber (9) is connected via a conveying channel to the reception area.

16. Device according to one of Claims 1 to 15, characterized in that the outlet (8) of the swirl chamber (9) is arranged underneath a sorting and/or orienting device of a conveyor (14) for the disentangled assembly parts (2), arranged downstream of the swirl chamber, and the outlet (12) is connected to the conveyor (14), forming the reception area, upstream of the sorting and/or orienting device in conveying direction.

17. Device according to one of Claims 1 to 16, characterized in that the nozzle arrangement (11) is actuated via a control device (19) for the continuous emission of compressed air.

18. Device according to one of Claims 1 to 17, characterized in that the nozzle arrangement (11) is actuated via control device (19) for the emission of compressed air pulses.

**Fig.1**

**Fig.2**

Fig.3

Fig.4

2

**Fig.5**

**Fig.6**

**Fig.7**

3